(19) Europäisches Patentamt
European Patent Office
Office européen des brevets

(11) **EP 4 063 322 B1**

(12) **EUROPEAN PATENT SPECIFICATION**

(45) Date of publication and mention
of the grant of the patent:
**10.05.2023   Bulletin 2023/19**

(21) Application number: **22163530.3**

(22) Date of filing: **22.03.2022**

(51) International Patent Classification (IPC):
**C01B 17/04** $^{(2006.01)}$

(52) Cooperative Patent Classification (CPC):
**C01B 17/0404**

(54) **CLAUS BURNER HAVING PIT VAPOR PIPE**

CLAUS-BRENNER MIT GRUBENDAMPFROHR

BRÛLEUR CLAUS DOTÉ DE TUYAU DE VAPEUR À FOSSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2021   KR 20210039866**

(43) Date of publication of application:
**28.09.2022   Bulletin 2022/39**

(73) Proprietor: **SK Innovation Co., Ltd.**
**Seoul 03188 (KR)**

(72) Inventors:
• **LEE, Jun Young**
**34124 Daejeon (KR)**
• **BAE, Sun Hyuk**
**34124 Daejeon (KR)**
• **PARK, Chan Saem**
**34124 Daejeon (KR)**
• **HAN, Jae Jin**
**03188 Seoul (KR)**

(74) Representative: **Mathys & Squire**
**Theatinerstraße 7**
**80333 München (DE)**

(56) References cited:
**US-A1- 2017 044 015     US-B2- 8 679 448**

**Description**

BACKGROUND OF THE INVENTION

Field of the Invention

The present disclosure relates to a Claus burner having a pit vapor pipe.

Description of the Related Art

As regulations related to the emission of air pollutants are strengthened, it is necessary to reduce concentrations of $H_2S$ and $SO_2$ emitted into the atmosphere. An amount of a sulfur component emitted to the atmosphere is reduced by converting $H_2S$ and $SO_2$ to elemental sulfur. As a technique for reducing $H_2S$ and $SO_2$, a modified Claus process is known.

The modified Claus process is based on the following two reactions.

$$[\text{Reaction equation 1}] \qquad H_2S + 3/2O_2 \leftrightarrow SO_2 + H_2O$$

Reaction equation 1 is a reaction in which hydrogen sulfide $H_2S$ is burned in a Claus burner to oxidize to sulfur dioxide SO2.

$$[\text{Reaction equation 2}] \qquad 2H_2S + SO_2 \leftrightarrow 3S + 2H_2O$$

Reaction equation 2 is the so-called Claus reaction converting sulfur dioxide and residual hydrogen sulfide to elemental sulfur.

The Claus reaction for the conversion of hydrogen sulfide and sulfur dioxide to elemental sulfur is carried out using several catalytic reactors being continued. The more catalytic reactors go through, the more elemental sulfur may be recovered.

Not all sulfur may be recovered by a continuous Claus catalytic reactor alone. A small amount of hydrogen sulfide remains in a tail gas stream, thereby being applied to a further step of tail gas purification (hereinafter referred to as "TGCU").

In a sulfur recovery unit (SRU) using such a Claus reaction, the Claus burner carries out, without a separate fuel injection used as a heat source except for initial ignition, a combustion reaction of an acid gas containing the hydrogen sulfide incoming from an Amine Process or a Sour Water Stripping Process and oxygen in combustion air.

Therefore, in the Claus burner, how ideally the acid gas and combustion air are mixed is the most important design factor in the Claus burner.

On the other hand, the SRU produces liquid sulfur, and such liquid sulfur is typically in a form not being degassed. The liquid sulfur is introduced into a liquid sulfur pit.

In US Pat. No. 8,679,448, liquid sulfur pits are agitated with a sweep gas such as air. In addition, a portion of the liquid sulfur from the liquid sulfur pit is degassed, the degassed liquid sulfur is properly stored or transported, and the gas comprising the purged hydrogen sulfide is recycled to the sulfur recovery unit.

Additional gas (hereinafter referred to as pit vapor) containing hydrogen sulfide introduced from the liquid sulfur pit often causes problems in combustion air control in the Claus burner of sulfur recovery units.

In particular, during a regular maintenance period, when a Claus burner is in a turndown operation, the inflow of the pit vapor into the Claus burner causes flow rate deviation in the existing acid gas stream and combustion air stream. Such a flow deviation often causes a backfire at the tip of the pit vapor in the Claus burner.

US2017/044015 discloses a supersulf process with internal cooling and heating reactors in subdewpoint sulfur recovery and tail gas treating systems.

The foregoing is intended merely to aid in the understanding of the background of the present disclosure, and is not intended to mean that the present disclosure falls within the purview of the related art that is already known to those skilled in the art.

SUMMARY OF THE INVENTION

Accordingly, the present disclosure has been made keeping in mind the above problems occurring in the related art, and the present disclosure is intended to provide a Claus burner having a pit vapor pipe to reduce a variation in a flow rate of pit vapor flowing into the Claus burner to no greater than a threshold value.

In order to achieve the above objective, according to one aspect of the present disclosure, there may be provided a Claus burner having a pit vapor pipe, the Claus burner including: a combustion air space part having a pit vapor inlet, a combustion air inlet, and a fuel inlet; a pit vapor pipe extending from the pit vapor inlet to an inside of the combustion air space part; and an acid gas space part having an acid gas inlet and a mixed gas outlet and being in fluid communication with the combustion air space part, wherein, the mixed gas may include combustion air, pit vapor, and acid gas, and at an end of the pit vapor pipe, at least one part selected from a group consisting of an elbow, a deflector, and a plurality of slits is formed in order to spray the pit vapor into the combustion air space part.

According to the specific exemplary embodiment, the pit vapor pipe may have a diameter of 5 cm to 25 cm.

According to the specific exemplary embodiment, a longitudinal direction of the pit vapor pipe may be parallel to a direction from the combustion air space part to the acid gas space part.

According to the specific exemplary embodiment, the combustion air inlet may be located in an upper part of the combustion air space part, and the combustion air may be introduced downward from the combustion air inlet.

According to the specific exemplary embodiment, the elbow may be bent at an angle ($\theta$) in a range of 20° to 270° with respect to a cross section surface and may be inclined at an angle ($\varphi$) in a range of 0° to 90° with respect to a vertical direction, of the pit vapor pipe.

According to the specific exemplary embodiment, the plurality of slits may be arranged along a circumference of the pit vapor pipe, and the end in a longitudinal direction of the pit vapor pipe may be blocked.

According to the specific exemplary embodiment, the plurality of slits may be arranged in a range of 0° to 90° with respect to a vertical direction.

According to the specific exemplary embodiment, the slit may have a width of 5 mm to 20 mm.

According to the specific exemplary embodiment, the deflector may include: a head installed spaced apart from the outlet of the pit vapor pipe so that the pit vapor supplied through the pit vapor pipe may be sprayed while colliding therewith; and a plurality of support parts extending from the outlet up to the head, of the pit vapor pipe.

According to the specific exemplary embodiment, each of the support parts may have a width of 5 mm to 20 mm.

According to the specific exemplary embodiment, the mixed gas may further include fuel.

As described above, the present disclosure has the advantage that, when the pit vapor flows into the Claus burner, particularly even when the sulfur recovery unit is in a turndown operation, pit vapor can be treated in the Claus burner without backfire.

BRIEF DESCRIPTION OF THE DRAWINGS

The above and other obj ectives, features, and other advantages of the present disclosure will be more clearly understood from the following detailed description when taken in conjunction with the accompanying drawings, in which:

FIG. 1 is a schematic diagram of a Claus burner having a conventional pit vapor pipe;

FIG. 2 shows views showing results of simulating flow velocity distributions of incoming species using computational fluid dynamics (CFD) in the conventional Claus burner shown in FIG. 1;

FIG. 3 shows views showing results of simulating temperature distributions of the incoming species using the CFD in the conventional Claus burner shown in FIG. 1;

FIGS. 4A and 4B are graphs of flow rate distribution factors and temperature distribution factors, respectively, measured in still another specific embodiment of the Claus burner shown in FIG. 1;

FIG. 5 is a schematic diagram of a Claus burner having a pit vapor pipe, in accordance with one specific embodiment of the present disclosure;

FIGS. 6A and 6B are sectional views of a Claus burner having the pit vapor pipe having an elbow, according to the one specific embodiment of the present disclosure;

FIG. 7 shows views showing flow rate distributions and temperature distributions in the Claus burner to which the elbow is applied to an end of the pit vapor pipe;

FIGS. 8A and 8B are flow rate distribution factors and temperature distribution factors, respectively, in the Claus burner when the elbow is applied to the pit vapor pipe according to the present disclosure;

FIGS. 9A and 9B are schematic diagrams of the pit vapor pipe before and after including slits, respectively;

FIGS. 10A and 10B are schematic views of the Claus burner having the pit vapor pipe having no slits and the pit vapor pipe having the slits, respectively;

FIG. 11 shows views comparing the flow rate distributions using the CFD in the Claus burner applied with the slits at the outlet of the pit vapor pipe;

FIG. 12 shows views comparing the temperature distributions using the CFD in the Claus burner having the pit vapor pipe applied with the slits;

FIGS. 13A and 13B are graphs of flow rate distribution factors and temperature distribution factors, respectively, in the Claus burner when the slits are applied to the pit vapor pipe;

FIGS. 14A to 14C are schematic diagrams of the pit vapor pipes including one having the deflector;

FIGS. 15A to 15C are schematic diagrams of the Claus burners installed with the various pit vapor pipes therein, respectively;

FIGS. 16A to 16C are views comparing flow rate distributions and temperature distributions using the CFD in the Claus burner having the pit vapor pipe applied with the deflector; and

FIGS. 17A and 17B are graphs showing the flow rate distribution factors and temperature distribution factors, respectively, in each Claus burner having an associated one of the various pit vapor pipes including the pit vapor pipe applied with the deflector.

## DETAILED DESCRIPTION OF THE INVENTION

The present disclosure may all be achieved by the following description. It is to be understood that the following description describes exemplary embodiments of the present disclosure, but the present disclosure is not necessarily limited thereto. In addition, it should be understood that the accompanying drawings are provided to aid understanding, but the present disclosure is not limited thereto.

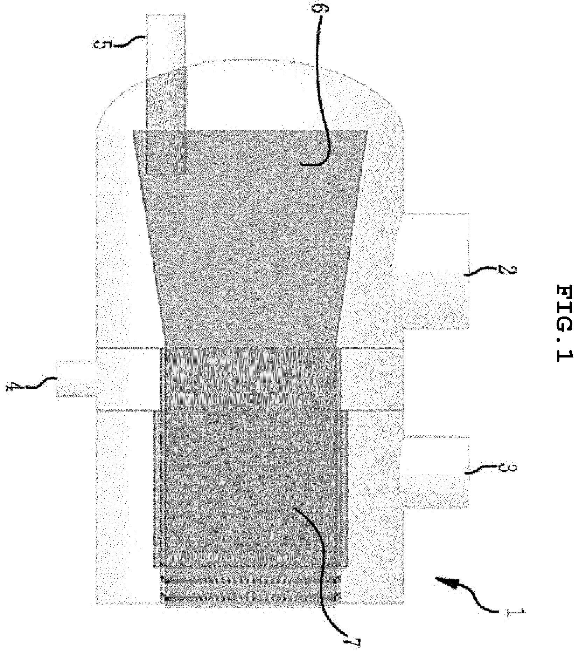

FIG. 1 is a schematic diagram of a Claus burner having a conventional pit vapor pipe.

In the present disclosure, "pit vapor" means a gas containing hydrogen sulfide produced by degassing liquid sulfur from liquid sulfur pits.

In the present disclosure, an outlet of a pit vapor pipe and an end of the pit vapor pipe are used interchangeably.

With reference to FIG. 1, there is shown a Claus burner 1 in which oxygen in combustion air and acid gas react to cause a combustion reaction. The Claus burner 1 includes: a combustion air space part 6 having a combustion air inlet 2; an acid gas space part 7 having an acid gas inlet 3 and being in fluid communication with the combustion air space part 6; and a pit vapor pipe 5 arranged inside the combustion air space part 6 in a direction from the combustion air space part 6 to the acid gas space part 7.

In one specific embodiment, the Claus burner 1 includes a fuel inlet 4 in the combustion air space part 6 and/or the acid gas space part 7.

In the one specific embodiment, acid gas includes amine acid gas. For example, the amine acid gas may be produced by treating sour gas by an amine gas treatment process, and this is known in the art. In another specific embodiment, the acid gas includes sour water stripper acid gas. The acid gas generally includes at least 5 mole percent hydrogen sulfide and may include up to about 80 to 95 mole percent hydrogen sulfide. The amine acid gas may include other gases such as carbon dioxide, water vapor, ammonia, other impurities, and the like but is not limited thereto.

A mixture of the combustion air, acid gas, and pit vapor is combusted in the Claus burner 1 and discharged into a thermal reactor (not shown) where a reaction of a Claus process takes place.

In the Claus burner, especially in the case of a turndown operation of the Claus burner, uniform mixing of the combustion air, acid gas, pit vapor, and optionally fuel is important in order to avoid backfire due to an inflow of the pit vapor.

In the present specification, the turndown operation refers to a case in which a flow rate of the combustion air, acid gas, and the like to the Claus reactor, compared to an operation case initially designed (design case), is reduced by no greater than about 30%, about 35%, or about 40%.

In one or more specific embodiments, the operation of Claus burners may take into account the cases shown in Table 1.

[Table 1]

| Cases | Operation methods |
|---|---|
| Case 01 | Design case / having no pit vapor |
| Case 02 | Design case / having pit vapor |
| Case 03 | Turndown (35%) case / having no pit vapor |
| Case 04 | Turndown (35%) case / having pit vapor |
| Case 05 | Turndown case only with [1]AAG / having pit vapor |
| Case 06 | 3000 $Nm^3$/hr case only with AAG / having pit vapor |
| Case 07 | 3500 $Nm^3$/hr case only with AAG / having pit vapor |
| 1) AAG stands for Amine Acid Gas. | |

As shown in Table 2 below, the Cases 05, 06, and 07 are the cases in which air and AAG flow rates are reduced compared to Case 02, and there are differences in absolute flow rates and flow rate ratios of the air and AAG in each case above.

In each case, constituents and flow rates of the incoming species are shown in Table 2.

[Table 2]

| Incoming species | | Case 01 | Case 02 | Case 03 | Case 04 | Case 05 | Case 06 | Case 07 |
|---|---|---|---|---|---|---|---|---|
| Combustion air (kg/h) | $N_2$ | 15150.04 | 13766.44 | 5302.51 | 3918.91 | 5510.27 | 7274.79 | 6352.77 |
| | $O_2$ | 4597.12 | 4177.28 | 1608.99 | 1189.15 | 1672.03 | 2207.45 | 1927.68 |
| | $H_2O$ | 660.25 | 599.95 | 231.08 | 170.79 | 240.14 | 317.04 | 276.86 |
| | Total | 20407.42 | 18543.67 | 7142.59 | 5278.85 | 7422.45 | 9799.29 | 8557.32 |
| Acid gas (kg/h) | $H_2O$ | 449.22 | 449.22 | 157.22 | 157.22 | 85.08 | 124.73 | 145.52 |
| | $NH_3$ | 555.96 | 555.96 | 194.58 | 194.58 | 0.95 | 1.39 | 1.63 |
| | $H_2S$ | 1876.10 | 1876.10 | 656.63 | 656.63 | 2946.21 | 4319.40 | 5039.30 |
| | Total | 2881.28 | 2881.28 | 1008.45 | 1008.45 | 3032.25 | 4445.54 | 5186.46 |
| Fuel (kg/h) | $H_2$ | | | | | 117.15 | 116.25 | 45.06 |
| | Total | | | | | 117.15 | 116.25 | 45.06 |
| Pit vapor (kg/h) | $N_2$ | | 1382.57 | | 1382.57 | 1382.57 | 1382.57 | 1382.57 |
| | $O_2$ | | 419.84 | | 419.84 | 419.84 | 419.84 | 419.84 |
| | $H_2O$ | | 61.61 | | 61.61 | 61.61 | 61.61 | 61.61 |
| | $H_2S$ | | 5.79 | | 5.79 | 5.79 | 5.79 | 5.79 |
| | Total | | 1869.82 | | 1869.82 | 1869.82 | 1869.82 | 1869.82 |

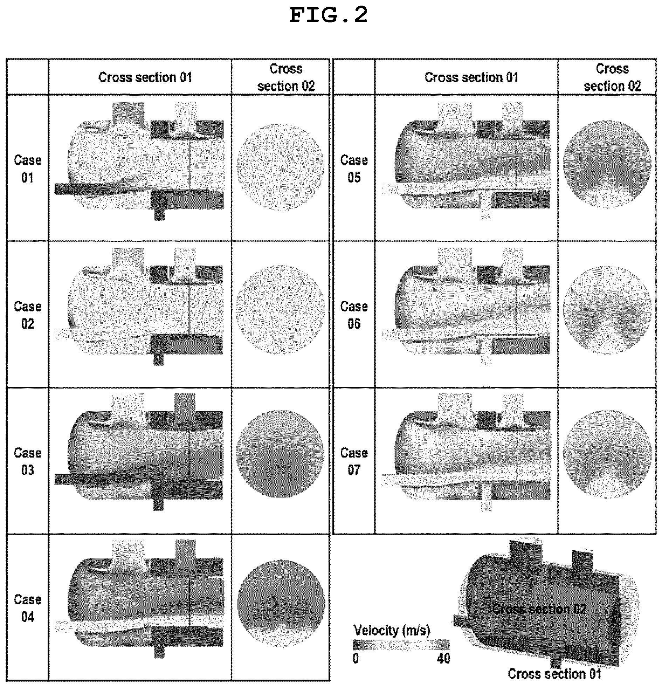

FIG. 2 shows views showing results of simulating distributions of flow velocity (herein, also referred to as flow rate) of incoming species using computational fluid dynamics (CFD) in the conventional Claus burner shown in FIG. 1.

In FIG. 2, a cross section 01 is a cross section in a longitudinal direction of the Claus burner, and a cross section 02 is a cross section in a transverse direction of the Claus burner between the combustion air inlet and the acid gas inlet.

As a result of comparing the flow rate distributions in the cross section 02 of FIG. 2, in the cases of the design operation (Cases 01 and 02), a deviation of the flow rates is not large regardless of the inflow of the pit vapor. With reference to FIG. 2, even in the cases of the turndown operation, when the pit vapor does not flow in (Case 03), the flow rate deviation is not large, but, when the pit vapor flows in (Case 04), the flow rate deviation increases. Even when the flow rates of combustion air and acid gas are changed while the pit vapor is introduced (Cases 05 - 07), a flow rate deviation exists at the cross section 02.

Consequentially, FIG. 2 shows that, when the pit vapor is introduced, the flow rate of the combustion air may need to be no less than a certain amount in order to improve the flow rate deviation at a front end of a combustion region (Cross section 02).

In the present specification, the combustion region and a flame generation area are the same region and may be used interchangeably.

In the one specific embodiment, the thermal reactor may be located downstream of the Claus burner. Accordingly, a partial region of the part where the thermal reactor is connected to the Claus burner may correspond to the combustion region.

In the one specific embodiment, a combustion region may start from the vicinity of a hole through which the acid gas is introduced.

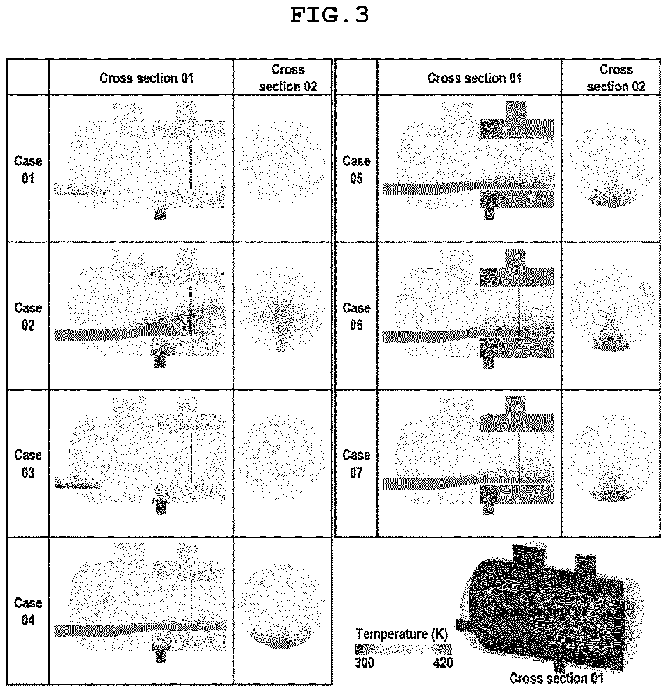

FIG. 3 shows views showing results of simulating temperature distributions of the incoming species using the CFD in the conventional Claus burner shown in FIG. 1.

As a result of comparing the temperature distributions in the cross section 02 of FIG. 3, in the cases of the design operation (Cases 01 and 02), a deviation of the temperature is not large regardless of the inflow of the pit vapor. Even in the cases of the turndown operation, when the pit vapor does not flow in (Case 03), the temperature deviation is not large, but, when the pit vapor flows in (Case 04), the temperature deviation increases. FIG. 3 shows that even when the flow rates of combustion air and acid gas are changed while the pit vapor is introduced (Cases 05 - 07), a temperature deviation may exist at the cross section 02.

For quantification of the flow rate distribution and temperature distribution, a degree of uniformization of the flow rate distribution and temperature distribution is compared at the cross section 02 of the Claus burner shown in FIG. 1.

The degree of uniformization of the distribution is generally compared through a distribution factor defined as follows, and the lower the value, the more uniform the distribution.

$$\text{Distribution factor} = \text{standard deviation of variable} / \text{mean of variable}$$

Through analyses and experimental results for the conventional Claus burner shown in FIG. 1, threshold values of flow rate distribution uniformity and temperature distribution uniformity for preventing degradation are set.

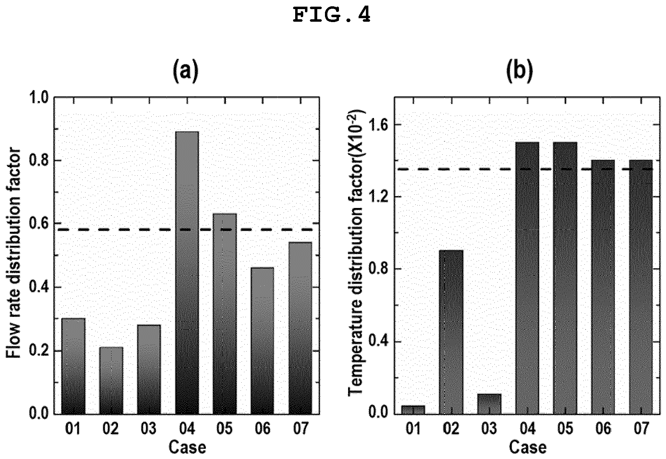

Table 3 below shows the flow rate (herein, also referred to as flow velocity) distribution and temperature distribution, measured at the cross section 02 of the Claus burner according to still another embodiment of a related art shown in FIG. 1. In the present specification, the flow rate and temperature are measured using the CFD. FIGS. 4A and 4B are graphs of flow rate distribution factors and temperature distribution factors in Table 3, respectively.

[Table 3]

| Cases | | 01 | 02 | 03 | 04 | 05 | 06 | 07 |
|---|---|---|---|---|---|---|---|---|
| Flow rate Distribution | Mean | 16.42 | 16.69 | 5.68 | 5.78 | 7.51 | 9.48 | 8.45 |
| | Standard deviation | 4.85 | 3.51 | 1.61 | 5.17 | 4.73 | 4.38 | 4.54 |
| | Mean/ Standard deviation | 0.30 | 0.21 | 0.28 | 0.89 | 0.63 | 0.46 | 0.54 |
| Temperature Distribution | Mean | 389.7 | 392.1 | 387.7 | 389.5 | 390.4 | 391.0 | 390.7 |
| | Standard deviation | 0.177 | 3.529 | 0.433 | 6.014 | 5.689 | 5.398 | 5.534 |
| | Mean/ Standard deviation | 4.5e-4 | 9.0e-3 | 1.1e-3 | 1.5e-2 | 1.5e-2 | 1.4e-2 | 1.4e-2 |

Among the cases shown in FIGS. 4A and 4B, when the flow rate distribution factor value exceeded 0.58, or the temperature distribution factor value exceeded $1.3 \times 10^{-2}$, damage to the Claus burner occurs.

With reference to Table 3 and FIGS. 4A and 4B, in Case 07 corresponding to the operation condition at startup, the flow rate distribution factor and the temperature distribution factor each exist near an associated threshold value. In addition, when the pit vapor is introduced, in all the cases where the flow rate of combustion air decreases, the flow rate distribution factor and the temperature distribution factor have values near or exceeding an associated one of the threshold values. The case where the flow rate distribution factor and the temperature distribution factor are the largest is Case 04, and Case 04 is a case where the flow rate of the combustion air is the smallest when the pit vapor is introduced.

As discussed above, as a result of considering the Claus burner according to the related art, for a stable operation in which the backfire does not occur, uniformity of the flow rate and temperature needs to be ensured at a front end surface (that is, cross section 02) where the combustion reaction occurs. A cause of the deviation in the flow rate and temperature is shown to be due to the fast inflow rate of the pit vapor. Moreover, when the pit vapor is introduced during the turndown operation, it appears that it is difficult to improve the fluctuations in the flow rate and temperature inside the Claus burner only by adjusting the combustion air flow rate.

Accordingly, according to the one specific embodiment of the present disclosure, an elbow may be formed at the outlet of the pit vapor pipe in order to ensure uniformity of the flow rate and temperature distribution in the front end surface for the combustion reaction.

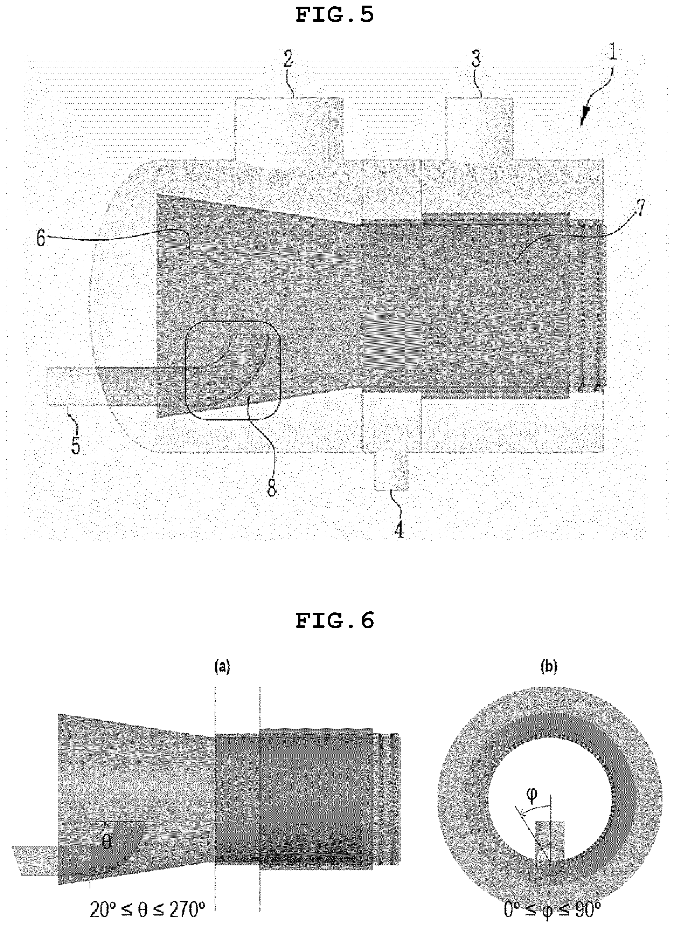

FIG. 5 is a schematic diagram of a Claus burner having a pit vapor pipe 5, in accordance with one specific embodiment of the present disclosure. An elbow 8 may be formed at the outlet of the pit vapor pipe 5 to inject the pit vapor toward the combustion air inlet 2.

In the one specific embodiment, the combustion air inlet 2 is located in an upper part of the combustion air space part 6, and the combustion air may be introduced downward from the combustion air inlet 2.

FIGS. 6A and 6B are sectional views of a Claus burner having the pit vapor pipe having an elbow, according to the one specific embodiment of the present disclosure. With reference to FIG. 6A of the left side, the elbow may be bent at a bending angle θ in a range of 20° to 270° with respect to a cross section surface of the pit vapor pipe.

In the one specific embodiment, when the bending angle θ is 270°, the pit vapor becomes to face a wall of an inlet direction and may be dispersed after colliding with the wall.

In the one specific embodiment, when the bending angle θ is 20°, the pit vapor may move to a central part as shown in FIG. 6A rather than directly touching the hole where the acid gas is ejected. In addition, when the bending angle θ is greater than 20°, the pit vapor may collide with an upper side wall or an opposite side wall, thereby generating an effect of decomposing the flow rate.

In addition, with reference to FIG. 6B of the right side, the elbow may be inclined at an inclination angle φ in a range of 0° to 90° with respect to a vertical direction of the pit vapor pipe.

When the inclination angle φ is 0°, it has an effect of colliding with the upper side wall to distribute the flow rate, and as it approaches 90°, it is possible to form a spiral flow flowing along a cylinder.

According to still another specific embodiment of the present disclosure, slits may be formed at the outlet of the pit vapor pipe in order to ensure uniformity of the flow rate distribution and temperature distribution of the flow in the front cross section of the combustion reaction resion.

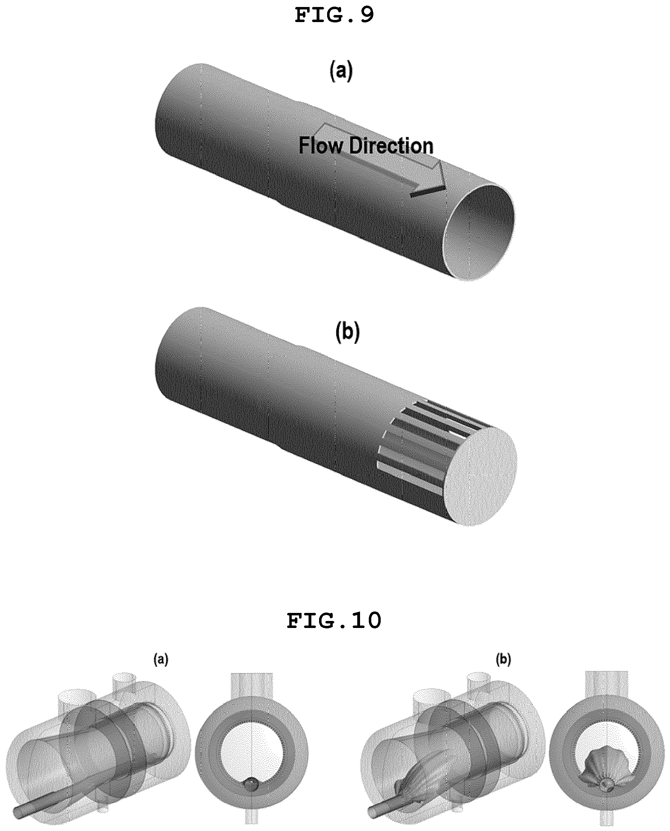

FIGS. 9A and 9B are schematic diagrams of the pit vapor pipe before and after including slits, respectively. That is, FIG. 9A of an upper figure is the pit vapor pipe not including the slits, and FIG. 9B of the lower figure is the pit vapor pipe including the slits.

In the one specific embodiment, the pit vapor pipe is a straight type and has an end in a flow direction blocked, and a plurality of the slits may extend longitudinally from the end and may be formed along a circumference of the pit vapor pipe.

In one or more specific embodiments, a length of the slit may be in a range of about 50 mm to about 300 mm, about 50 mm to about 250 mm, about 50 mm to about 200 mm, about 50 mm to about 150 mm, about 50 mm to about 100 mm, about 100 mm to about 300 mm, about 150 mm to about 300 mm, about 200 mm to about 300 mm, about 250 mm to about 300 mm, or in all ranges and sub-ranges therebetween.

In one or more specific embodiments, a width of the slit may be in a range of about 5 mm to about 20 mm, about 5 mm to about 15 mm, about 5 mm to about 10 mm, about 10 mm to about 20 mm, about 15 mm to about 20 mm, or in all ranges and sub-ranges therebetween.

In one or more specific embodiments, the plurality of slits may be arranged in a range of 0° to 90°, 0° to 80°, 0° to 70°, 0° to 60°, 0° to 50°, 0° to 40°, 0° to 30°, 0° to 20°, 0° to 10°, 10° to 90°, 20° to 90°, 30° to 90°, 40° to 90°, 50° to 90°, 60° to 90°, 70° to 90°, 80° to 90°, or in all ranges and sub-ranges therebetween with respect to a vertical direction, thereby spraying the pit vapor upward.

In one or more specific embodiments, the number of slits may be in in a range of 1 to 20, 2 to 19, 3 to 18, 4 to 17, 5 to 16, 6 to 15, 7 to 14, 8 to 13, 9 to 12, 10 to 11, or in all ranges and sub-ranges therebetween.

FIGS. 10A and 10B are schematic views of the Claus burner having the pit vapor pipe having no slits and the pit vapor pipe having the slits, respectively.

Because a diameter (about 6") of the pit vapor pipe is small compared to the flow rate, the pit vapor may be injected into the Claus burner through the pit vapor pipe at a velocity of about 30 m/s. As shown in FIG. 10A of the left side, in the Claus burner having the conventional pit vapor pipe of a straight pipe type, the pit vapor has a velocity maintained up to the combustion region, which may cause flame instability. However, as shown in FIG. 10B of the right side, in the Claus burner having the pit vapor pipe in which the slits are formed, the pit vapor is discharged through the slits and mixed with the surrounding combustion air while spreading widely, whereby the velocity of the pit vapor is not maintained up to the flame generation area and may be reduced.

As described above, in Case 04 (turndown (35%) case / having pit vapor) and Case 05 (turndown case only with AAG / having pit vapor), when the pit vapor is injected, the Claus burners may be degraded by the flow rate and temperature deviations.

To improve the flow rate and temperature deviations, flow rate control of the pit vapor may be performed (Cases 04-1 and 05-1), or the shape of the pit vapor pipe may be changed to include the slits (Case 04-Slit and 05-Slit).

Table 4 below shows the flow rate of the incoming species in the cases (Cases 04-1 and 05-1) in which the flow rate control of the pit vapor is performed.

[Table 4]

| Incoming species | | Case 04 | Case 05 | Case 04-1 | Case 05-1 | Case 04-Slit | Case 05-Slit |
|---|---|---|---|---|---|---|---|
| Combustion air (kg/h) | $N_2$ | 3918.91 | 5510.27 | 3918.91 | 5510.27 | 3918.91 | 5510.27 |
| | $O_2$ | 1189.15 | 1672.03 | 1189.15 | 1672.03 | 1189.15 | 1672.03 |
| | $H_2O$ | 170.79 | 240.14 | 170.79 | 240.14 | 170.79 | 240.14 |
| | Total | 5278.85 | 7422.45 | 5278.85 | 7422.45 | 5278.85 | 7422.45 |
| Acid gas (kg/h) | $H_2O$ | 157.22 | 85.08 | 157.22 | 85.08 | 157.22 | 85.08 |
| | $NH_3$ | 194.58 | 0.95 | 194.58 | 0.95 | 194.58 | 0.95 |
| | $H_2S$ | 656.63 | 2946.21 | 656.63 | 2946.21 | 656.63 | 2946.21 |
| | Total | 1008.45 | 3032.25 | 1008.45 | 3032.25 | 1008.45 | 3032.25 |
| Fuel (kg/h) | $H_2$ | | 117.15 | | 117.15 | | 117.15 |
| | Total | | 117.15 | | 117.15 | | 117.15 |
| Pit vapor (kg/h) | $N_2$ | 1382.57 | 1382.57 | 1243.94 | 1243.94 | 1382.57 | 1382.57 |
| | $O_2$ | 419.84 | 419.84 | 377.74 | 377.74 | 419.84 | 419.84 |
| | $H_2O$ | 61.61 | 61.61 | 25.23 | 25.23 | 61.61 | 61.61 |
| | $H_2S$ | 5.79 | 5.79 | 5.79 | 5.79 | 5.79 | 5.79 |
| | Total | 1869.82 | 1869.82 | 1652.70 | 1652.70 | 1869.82 | 1869.82 |

According to still another specific embodiment of the present disclosure, a deflector may be formed at the outlet of the pit vapor pipe in order to ensure uniformity of the flow rate distribution and temperature distribution.

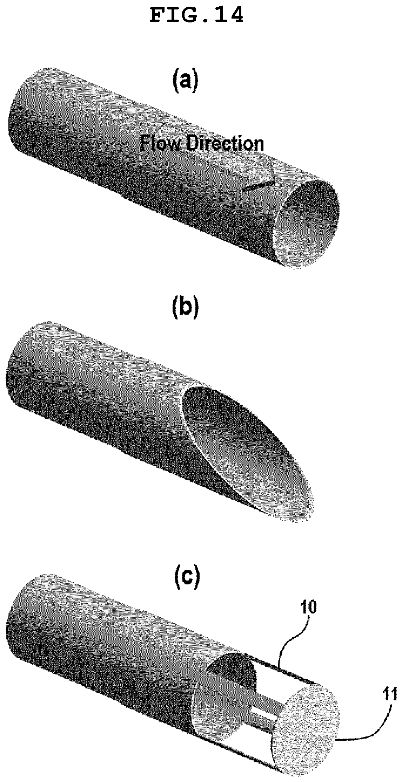

FIGS. 14A to 14C are schematic diagrams of the respective pit vapor pipes. Specifically, FIG. 14A is the conventional pit vapor pipe of a straight pipe type, FIG. 14B is the pit vapor pipe of a cut pipe type cut at an angle of 30°, and FIG. 14C is the pit vapor pipe of a deflector type including the deflector.

In the one specific embodiment, with reference to FIG. 14C, the deflector may include a head 11 installed spaced apart from the outlet of the pit vapor pipe so that the pit vapor supplied through the pit vapor pipe may be sprayed while colliding therewith and a plurality of support parts 10 extending from the outlet up to the head, of the pit vapor pipe.

In one or more specific embodiments, a width of each of the support parts may be in a range of about 5 mm to about 100 mm, about 10 mm to about 90 mm, about 20 mm to about 80 mm, about 30 mm to about 70 mm, about 40 mm to about 60 mm, or in in all ranges and sub-ranges therebetween.

In the present specification, "width" means a shortest straight line distance between opposite side surfaces.

In one or more specific embodiments, a length of the support part may be in a range of about 100 mm to about 300 mm, about 100 mm to about 250 mm, about 100 mm to about 200 mm, about 100 mm to about 150 mm, about 150 mm to about 300 mm, about 200 mm to about 300 mm, about 250 mm to about 300 mm, or in all ranges and sub-ranges therebetween.

In one or more specific embodiments, the number of supports may be in a range of about 2 to 20, 4 to 18, 6 to 16, 8 to 14, 10 to 12, or in all ranges and sub-ranges therebetween.

The pit vapor pipe having the deflector may prevent a phenomenon that the pit vapor plugs the slit.

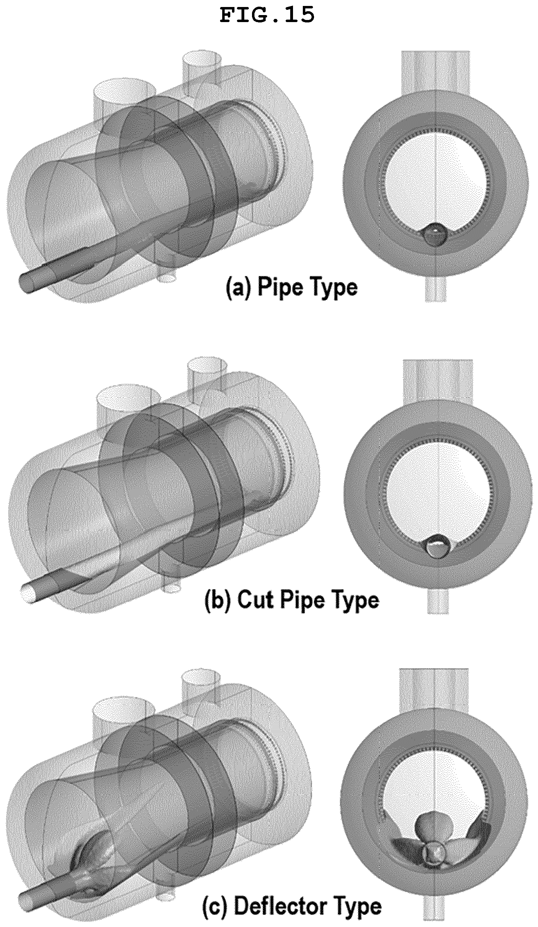

FIGS. 15A to 15C are schematic diagrams of the Claus burners installed with the various pit vapor pipes therein, respectively. Specifically, FIG. 15A is the Claus burner having the conventional straight type pipe, FIG. 15B is the Claus burner having the cut type pipe cutting the outlet at an angle of 30°, and FIG. 15C is the Claus burner having the pipe including the deflector.

Because a diameter (about 6") of the pit vapor pipe is small compared to the flow rate, the pit vapor may be injected into the Claus burner through the pit vapor pipe at a velocity of about 30 m/s.

As shown in FIG. 15A, in the Claus burner having the conventional pit vapor pipe of the straight pipe type, the pit vapor has a velocity maintained up to the combustion region, which may cause flame instability. As shown in FIG. 15B, the pit vapor injected through the pit vapor pipe of the cut pipe type shows a flow pattern almost similar to that of the conventional pit vapor pipe of the straight pipe type. In the case of the pit vapor pipe of the deflector type shown in FIG. 15C, the flow of the pit vapor is blocked by the head of the deflector, discharged through the holes in the side surface, spreads widely, and mixed with the surrounding combustion air so that the velocity of the pit vapor shows a decreasing pattern without reaching the flame generation area.

Example 1

Hereinafter, the present disclosure will be described in more detail through examples, but the scope of the present disclosure is not limited to the following examples.

Example 1

Of the design cases, the elbow according to the present disclosure is applied to the pit vapor pipe for the case into which the pit vapor is introduced (Case 02) and the case having the largest flow rate deviation and temperature deviation (Case 04).

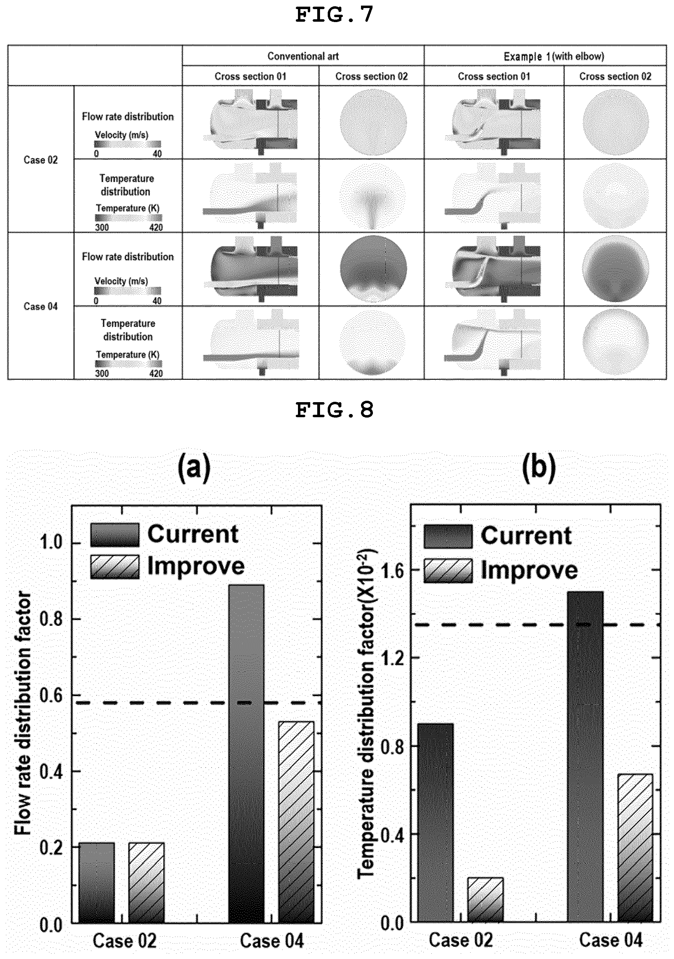

FIG. 7 shows views showing flow rate distributions and temperature distributions in the Claus burner to which the elbow is applied to an end of the pit vapor pipe. With reference to FIG. 7, In the Claus burner according to Example 1, the pit vapor is not directly introduced into the combustion region, but moves upward, and then moves to the combustion region. In both Cases 02 and 04, in the process of the pit vapor moving upward through the elbow, the flow rate deviation and temperature deviation exist in an upper region of cross section 02, but overall, it is shown that the deviations tend to be moderated.

Table 5 shows values of the flow rate distribution and the temperature distribution in the Claus burner when the elbow is applied to the pit vapor pipe according to Example 1.

[Table 5]

|  |  | Conventional art | | Improved (Example 1) | |
|---|---|---|---|---|---|
|  |  | Case 02 | Case 04 | Case 02 | Case 04 |
| flow rate Distribution | Mean | 16.69 | 5.78 | 16.91 | 5.90 |
|  | Standard Deviation | 3.51 | 5.17 | 3.61 | 3.11 |
|  | Deviation/Mea n | 0.21 | 0.89 | 0.21 | 0.53 |
| Temperature | Mean | 392.1 | 389.5 | 391.9 | 392.9 |
| Distribution | Standard Deviation | 3.529 | 6.014 | 0.791 | 2.649 |
|  | Deviation/Mea n | 9.0e-3 | 1.5e-2 | 2.0e-3 | 6.7e-3 |

FIGS. 8A and 8B are flow rate distribution factors and temperature distribution factors, respectively, in the Claus burner when the elbow is applied to the pit vapor pipe according to Example 1.

With reference to Table 5 and FIGS. 8A and 8B, in Case 04, when the elbow is applied, a deviation improvement effect is about 40% in terms of flow rate and about 55% in terms of temperature.

As discussed above, when the pit vapor is introduced during the turndown operation, the flow rate and the deviations of the flow rate have values near or above the threshold values. It appears that such a deviation is difficult to improve only by increasing the flow rate of combustion air. In the results of Example 1, when the elbow is applied to the pit vapor pipe outlet (that is, end part), in both the design operation and the turndown operation, it is observed the effect that the deviation is improved, that is, reduced. Accordingly, the Claus burner may be stably operated without an occurrence of backfire.

Example 2

For Case 04 (turndown (35%) case / having pit vapor) and Case 05 (turndown case only with AAG / having pit vapor), slits according to the present disclosure are applied to the outlet of the pit vapor pipe.

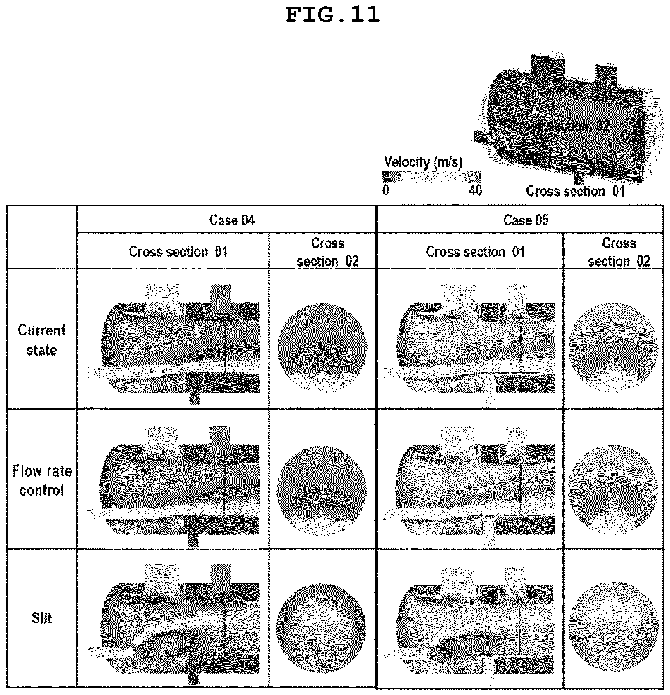

FIG. 11 shows views comparing the flow rate distributions using the CFD in the Claus burner applied with the slits at the outlet of the pit vapor pipe.

With reference to FIG. 11, in Cases 04 and 05, as the pit vapor is introduced, the flow rate deviation increases at a bottom part of the burner. In Case 05, unlike Case 04, the acid gas is introduced, but this does not affect the flow rate deviation at the front end of the combustion region. In the case of flow rate control, it exhibits an effect of improving the flow rate deviation compared to the case of the current state, but as a phenomenon arises such that the flow rate is concentrated in the lower part of the burner, the deviation appears in cross section 02. However, when the pit vapor pipe including the slits is applied, it is confirmed that the flow rate, which has been concentrated in the lower part of the burner, shows a phenomenon in which the deviation thereof is alleviated.

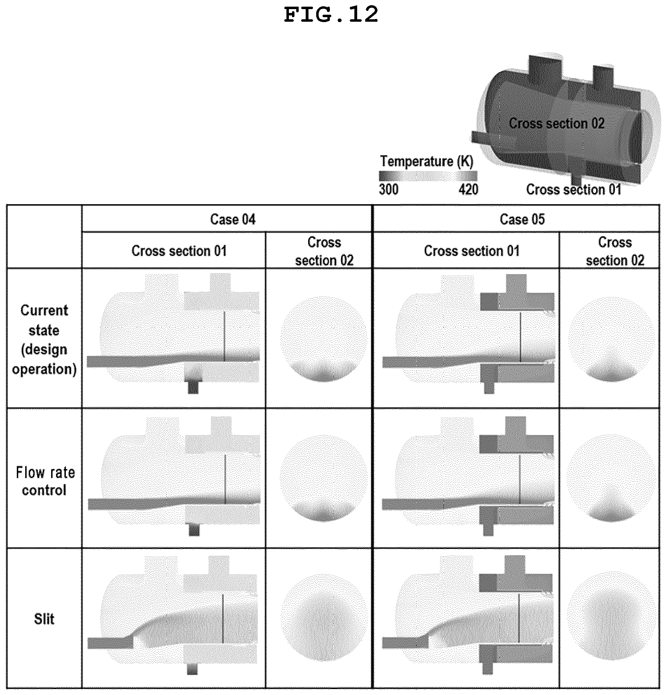

FIG. 12 shows views comparing the temperature distributions using the CFD in the Claus burner having the pit vapor pipe applied with the slits.

With reference to FIG. 12, in Cases 04 and 05, as the pit vapor is introduced, the temperature deviation at the bottom part of the burner increases. In Case 05, compared to Case 04, more acid gas is introduced, but this does not affect the temperature deviation in the front end of the combustion region. In the case of flow rate control, it exhibits an effect of improving the flow rate deviation compared to the case of the current state as is, but as a phenomenon arises such that the flow rate is concentrated in the lower part of the burner, the deviation appears in cross section 02. When the pit vapor pipe formed with the slits is applied, it is confirmed that the flow rate, which has been concentrated in the lower part of the burner, shows a phenomenon in which the deviation thereof is alleviated.

Table 6 shows values of the flow rate distribution and the temperature distribution in the Claus burner when the slits are applied to the pit vapor pipe according to Example 2.

[Table 6]

| Cases | | 04 | 04-1 (flow rate control) | 04-Slit | 05 | 05-1 (flow rate control) | 05-Slit |
|---|---|---|---|---|---|---|---|
| Flow rate Distribution | Mean | 5.78 | 5.58 | 5.73 | 7.51 | 7.33 | 7.47 |
| | Standard Deviation | 5.17 | 4.39 | 1.98 | 4.73 | 3.97 | 1.63 |
| | Deviation /Mean | 0.89 | 0.79 | 0.35 | 0.63 | 0.54 | 0.22 |
| Temperature Distribution | Mean | 389.5 | 389.4 | 393.1 | 390.4 | 390.3 | 393.0 |
| | Standard Deviation | 6.014 | 5.961 | 4.050 | 5.689 | 5.641 | 4.204 |
| | Deviation /Mean | 1.5e-2 | 1.5e-2 | 1.0e-2 | 1.5e-2 | 1.4e-2 | 1.1e-2 |

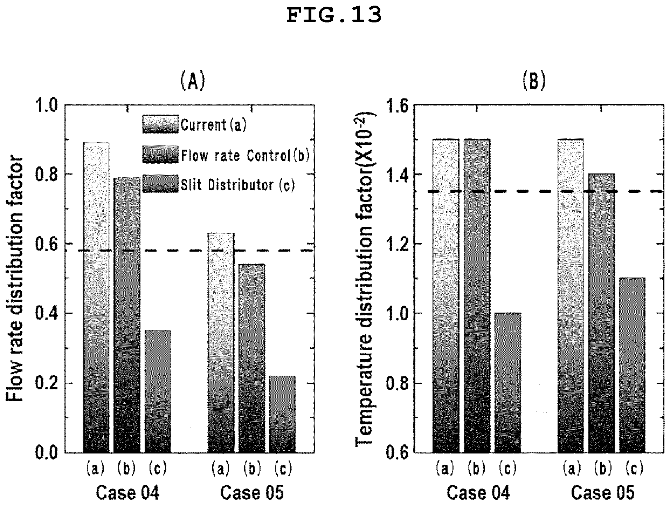

FIGS. 13A and 13B are graphs of flow rate distribution factors and temperature distribution factors, respectively, in the Claus burner when the slits are applied to the pit vapor pipe according to Example 2.

In Case 04, even with flow rate control (Case 04-1), both the flow rate distribution factor and the temperature distribution factor have values above the respective threshold values. In Case 05, with flow rate control (Case 05-1), it is possible to improve the flow rate deviation, but the temperature deviation has a value above the threshold. However, when the slits are applied to the pit vapor pipe, both the flow rate distribution factor and temperature distribution factor may be lowered to have values below the respective threshold values.

Example 3

In Case 04 (turndown (35%) case / having pit vapor), the deflector according to the present disclosure is applied to the outlet of the pit vapor pipe.

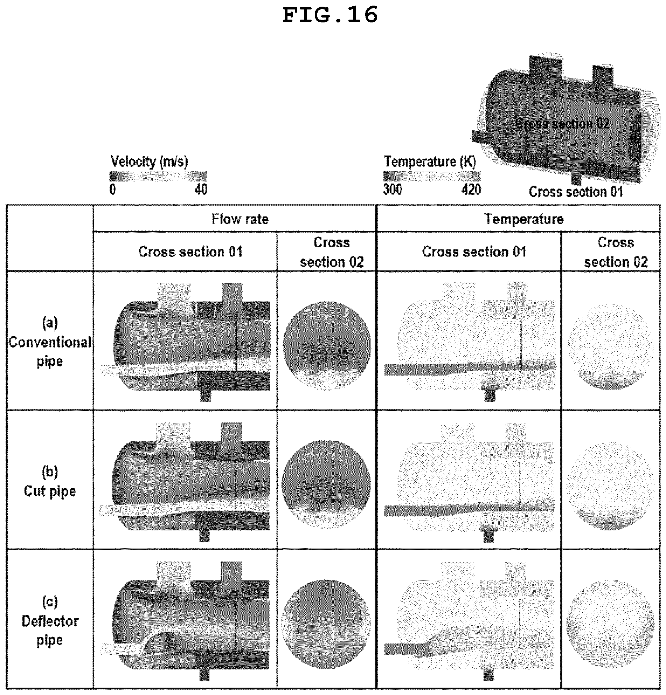

FIGS. 16A to 16C are views comparing flow rate distributions and temperature distributions using the CFD in the Claus burner having the pit vapor pipe applied with the deflector. In the case of the conventional pit vapor pipe of the pipe type in FIG. 16A, as the pit vapor is introduced, the flow rate deviation increases at the lower part of the burner. In the case of the pit vapor pipe of the cut pipe type in FIG. 16B, it appears the flow pattern similar to that of the conventional pit vapor pipe of the pipe type in FIG. 16A, and there is little change in the deviation. In the case of the pit vapor pipe of the deflector pipe type in FIG. 16C, it is confirmed that the flow rate deviation of the pit vapor concentrated in the lower part of the burner is alleviated.

Table 7 shows the values of the flow rate distribution and the temperature distribution in the Claus burner when the deflector is applied to the pit vapor pipe according to Example 3.

[Table 7]

| Cases | | (a)Conventional Pipe | (b)Cut pipe | (c)Deflector Pipe |
|---|---|---|---|---|
| Flow rate Distribution | Mean | 5.78 | 5.76 | 5.75 |
| | Standard Deviation | 5.17 | 4.99 | 1.74 |
| | Deviation /Mean | 0.89 | 0.87 | 0.30 |

(continued)

| Cases | | (a)Conventional Pipe | (b)Cut pipe | (c)Deflector Pipe |
|---|---|---|---|---|
| Temperature Distribution | Mean | 389.5 | 389.6 | 393.4 |
| | Standard Deviation | 6.014 | 5.967 | 3.725 |
| | Deviation /Mean | 1.5e-2 | 1.5e-2 | 9.5e-3 |

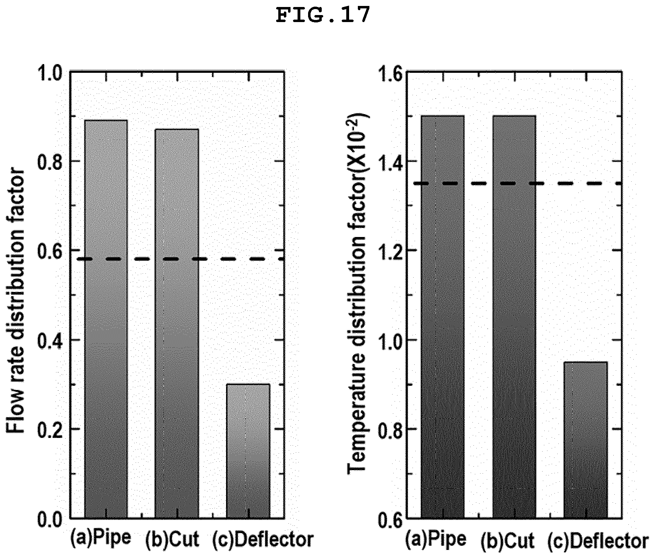

FIGS. 17A and 17B are graphs showing the flow rate distribution factors and temperature distribution factors, respectively, in each Claus burner having an associated one of the various pit vapor pipes including the pit vapor pipe applied with the deflector.

As shown in FIGS. 17A and 17B, in the case of (b) cut pipe, there is little degree of improvement in deviation compared to (a) the conventional case. However, in the case of (c) deflector application, both the flow rate deviation and temperature deviation are able to be lowered to have values below the threshold values.

**Claims**

1. A Claus burner having a pit vapor pipe and allowing a combustion reaction to be generated by reacting acid gas with oxygen in combustion air, the Claus burner comprising:

   a combustion air space part having a pit vapor inlet, a combustion air inlet, and a fuel inlet;
   a pit vapor pipe extending from the pit vapor inlet to an inside of the combustion air space part; and
   an acid gas space part having an acid gas inlet and a mixed gas outlet and being in fluid communication with the combustion air space part,
   wherein, the mixed gas comprises combustion air, pit vapor, and acid gas, and
   at an end of the pit vapor pipe, at least one part selected from a group consisting of an elbow, a deflector, and a plurality of slits is formed in order to spray the pit vapor into the combustion air space part.

2. The Claus burner of claim 1, wherein the pit vapor pipe has a diameter of 5 cm to 25 cm.

3. The Claus burner of claim 1, wherein a longitudinal direction of the pit vapor pipe is parallel to a direction from the combustion air space part to the acid gas space part.

4. The Claus burner of claim 1, wherein the combustion air inlet is located in an upper part of the combustion air space part, and the combustion air is introduced downward from the combustion air inlet.

5. The Claus burner of claim 1, wherein the elbow is bent at an angle ($\theta$) in a range of 20° to 270° with respect to a cross section surface and is inclined at an angle ($\varphi$) in a range of 0° to 90° with respect to a vertical direction, of the pit vapor pipe.

6. The Claus burner of claim 1, wherein the plurality of slits is arranged along a circumference of the pit vapor pipe, and the end in a longitudinal direction of the pit vapor pipe is blocked.

7. The Claus burner of claim 6, wherein the plurality of slits is arranged in a range of 0° to 90° with respect to a vertical direction.

8. The Claus burner of claim 6, wherein the slit has a width of 5 mm to 20 mm.

9. The Claus burner of claim 1, wherein the deflector comprises:

   a head installed spaced apart from the outlet of the pit vapor pipe so that the pit vapor supplied through the pit vapor pipe is sprayed while colliding therewith; and
   a plurality of support parts extending from the outlet up to the head, of the pit vapor pipe.

10. The Claus burner of claim 9, wherein each of the support parts has a width of 5 mm to 20 mm.

**11.** The Claus burner of claim 1, the mixed gas further comprises fuel.

**Patentansprüche**

**1.** Claus-Brenner mit einem Grubendampfrohr, der die Erzeugung einer Verbrennungsreaktion durch Reaktion von saurem Gas mit Sauerstoff in Verbrennungsluft ermöglicht, wobei der Claus-Brenner Folgendes umfasst:

ein Verbrennungsluftraumteil mit einem Grubendampfeinlass, einem Verbrennungslufteinlass und einem Brennstoffeinlass;
ein Grubendampfrohr, das sich vom Grubendampfeinlass zu einer Innenseite des Verbrennungsluftraumteils erstreckt; und
ein Sauergasraumteil mit einem Sauergaseinlass und einem Mischgasauslass, das in Fluidverbindung mit dem Verbrennungsluftraumteil steht,
wobei das Mischgas Verbrennungsluft, Grubendampf und saures Gas umfasst, und
an einem Ende des Grubendampfrohrs mindestens ein Teil ausgewählt aus einer Gruppe bestehend aus einem Krümmer, einem Deflektor und einer Mehrzahl von Schlitzen ausgebildet ist, um den Grubendampf in den Verbrennungsluftraumteil zu sprühen.

**2.** Claus-Brenner nach Anspruch 1, wobei das Grubendampfrohr einen Durchmesser von 5 cm bis 25 cm hat.

**3.** Claus-Brenner nach Anspruch 1, wobei eine Längsrichtung des Grubendampfrohrs parallel zu einer Richtung vom Verbrennungsluftraumteil zum Sauergasraumteil verläuft.

**4.** Claus-Brenner nach Anspruch 1, wobei sich der Verbrennungslufteinlass in einem oberen Teil des Verbrennungsluftraumteils befindet und die Verbrennungsluft vom Verbrennungslufteinlass nach unten eingeleitet wird.

**5.** Claus-Brenner nach Anspruch 1, wobei der Krümmer in einem Winkel ($\theta$) in einem Bereich von 20° bis 270° in Bezug auf eine Querschnittsfläche gebogen und in einem Winkel ($\varphi$) in einem Bereich von 0° bis 90° in Bezug auf eine vertikale Richtung des Grubendampfrohrs geneigt ist.

**6.** Claus-Brenner nach Anspruch 1, wobei die Mehrzahl von Schlitzen entlang eines Umfangs des Grubendampfrohrs angeordnet ist und das Ende in Längsrichtung des Grubendampfrohrs blockiert ist.

**7.** Claus-Brenner nach Anspruch 6, wobei die Mehrzahl von Schlitzen in einem Bereich von 0° bis 90° in Bezug auf eine vertikale Richtung angeordnet ist.

**8.** Claus-Brenner nach Anspruch 6, wobei der Schlitz eine Breite von 5 mm bis 20 mm hat.

**9.** Claus-Brenner nach Anspruch 1, wobei der Deflektor Folgendes umfasst:

einen Kopf, der in einem Abstand vom Auslass des Grubendampfrohrs installiert ist, so dass der durch das Grubendampfrohr zugeführte Grubendampf bei seiner Kollision mit diesem zerstäubt wird; und
eine Mehrzahl von Stützteilen, die sich vom Auslass bis zum Kopf des Grubendampfrohrs erstrecken.

**10.** Claus-Brenner nach Anspruch 9, wobei jedes der Stützteile eine Breite von 5 mm bis 20 mm aufweist.

**11.** Claus-Brenner nach Anspruch 1, wobei das Mischgas außerdem Brennstoff enthält.

**Revendications**

**1.** Brûleur Claus ayant un tuyau de vapeur de fosse et permettant qu'une réaction de combustion soit générée par réaction de gaz acide avec de l'oxygène dans de l'air de combustion, le brûleur Claus comprenant :

une partie d'espace d'air de combustion ayant une entrée de vapeur de fosse, une entrée d'air de combustion, et une entrée de combustible ;
un tuyau de vapeur de fosse s'étendant de l'entrée de vapeur de fosse vers un intérieur de la partie d'espace d'air de combustion ; et

une partie d'espace de gaz acide ayant une entrée de gaz acide et une sortie de gaz mixte et étant en communication fluidique avec la partie d'espace d'air de combustion,

dans lequel, le gaz mixte comprend de l'air de combustion, de la vapeur de fosse, et du gaz acide, et

au niveau d'une extrémité du tuyau de vapeur de fosse, au moins une partie choisie parmi un groupe constitué par un coude, un déflecteur, et une pluralité de fentes, est formée afin de pulvériser la vapeur de fosse jusque dans la partie d'espace d'air de combustion.

2.  Brûleur Claus selon la revendication 1, dans lequel le tuyau de vapeur de fosse a un diamètre de 5 cm à 25 cm.

3.  Brûleur Claus selon la revendication 1, dans lequel une direction longitudinale du tuyau de vapeur de fosse est parallèle à une direction de la partie d'espace d'air de combustion à la partie d'espace de gaz acide.

4.  Brûleur Claus selon la revendication 1, dans lequel l'entrée d'air de combustion est située dans une partie supérieure de la partie d'espace d'air de combustion, et l'air de combustion est introduit vers le bas depuis l'entrée d'air de combustion.

5.  Brûleur Claus selon la revendication 1, dans lequel le coude est plié selon un angle ($\theta$) dans une plage de 20° à 270° par rapport à une surface transversale et est incliné selon un angle ($\varphi$) dans une plage de 0° à 90° par rapport à une direction verticale, du tuyau de vapeur de fosse.

6.  Brûleur Claus selon la revendication 1, dans lequel la pluralité de fentes est agencée le long d'une circonférence du tuyau de vapeur de fosse, et l'extrémité dans une direction longitudinale du tuyau de vapeur de fosse est bloquée.

7.  Brûleur Claus selon la revendication 6, dans lequel la pluralité de fentes est agencée dans une plage de 0° à 90° par rapport à une direction verticale.

8.  Brûleur Claus selon la revendication 6, dans lequel la fente a une largeur de 5 mm à 20 mm.

9.  Brûleur Claus selon la revendication 1, dans lequel le déflecteur comprend :

    une tête installée à l'écart de la sortie du tuyau de vapeur de fosse de sorte que la vapeur de fosse fournie à travers le tuyau de vapeur de fosse est pulvérisée quand elle se heurte à celle-ci ; et

    une pluralité de pièces de support s'étendant de la sortie jusqu'à la tête, du tuyau de vapeur de fosse.

10. Brûleur Claus selon la revendication 9, dans lequel chacune des pièces de support a une épaisseur de 5 mm à 20 mm.

11. Brûleur Claus selon la revendication 1, le gaz mixte comprend en outre du combustible.

## FIG.1

# FIG.2

# FIG.3

FIG.4

(a)

(b)

# FIG.5

# FIG.6

(a)

(b)

$20° \leq \theta \leq 270°$

$0° \leq \varphi \leq 90°$

# FIG.7

| | | Conventional art | | Example 1(with elbow) | |
|---|---|---|---|---|---|
| | | Cross section 01 | Cross section 02 | Cross section 01 | Cross section 02 |
| Case 02 | Flow rate distribution<br>Velocity (m/s)<br>0　　40 | | | | |
| | Temperature distribution<br>Temperature (K)<br>300　　420 | | | | |
| Case 04 | Flow rate distribution<br>Velocity (m/s)<br>0　　40 | | | | |
| | Temperature distribution<br>Temperature (K)<br>300　　420 | | | | |

# FIG.8

FIG.9

(a)

Flow Direction

(b)

FIG.10

(a)                                                        (b)

EP 4 063 322 B1

FIG.11

Velocity (m/s)

0          40    Cross section 01

Cross section 02

| | Case 04 | | Case 05 | |
|---|---|---|---|---|
| | Cross section 01 | Cross section 02 | Cross section 01 | Cross section 02 |
| Current state | | | | |
| Flow rate control | | | | |
| Slit | | | | |

21

# FIG.12

FIG.13

(A)

(B)

# FIG.14

## (a)

Flow Direction

## (b)

## (c)

10

11

# FIG.15

(a) Pipe Type

(b) Cut Pipe Type

(c) Deflector Type

# FIG.16

FIG.17

**EP 4 063 322 B1**

**REFERENCES CITED IN THE DESCRIPTION**

**Patent documents cited in the description**

- US 8679448 B
- US 2017044015 A